Europäisches Patentamt

(19) European Patent Office

Office européen des brevets

(11) Publication number: **0 307 030 B1**

# (12) EUROPEAN PATENT SPECIFICATION

(45) Date of publication of patent specification :
30.10.91 Bulletin 91/44

(51) Int. Cl.⁵ : **F28D 1/053, F28F 1/02, A01G 9/24**

(21) Application number : 88201831.0

(22) Date of filing : 26.08.88

(54) Heating pipe.

(30) Priority : 28.08.87 NL 8702021

(43) Date of publication of application :
15.03.89 Bulletin 89/11

(45) Publication of the grant of the patent :
30.10.91 Bulletin 91/44

(84) Designated Contracting States :
AT BE CH DE FR GB IT LI LU NL

(56) References cited :
FR-A- 436 317
FR-A- 2 385 023
FR-A- 2 445 213
US-A- 1 558 205
US-A- 1 608 204
US-A- 1 874 009

(73) Proprietor : Treur, Teunis Jan
Machineweg 3
NL-1432 EK Aalsmeer (NL)

(72) Inventor : Treur, Teunis Jan
Machineweg 3
NL-1432 EK Aalsmeer (NL)

(74) Representative : Smulders, Theodorus A.H.J.,
Ir. et al
Vereenigde Octrooibureaux Nieuwe Parklaan
107
NL-2587 BP 's-Gravenhage (NL)

EP 0 307 030 B1

## Description

This invention relates to a heating pipe for emitting heat supplied by means of a fluid passed therethrough and having in cross-section a wall deviating from a circular or regularly polygonal shape.

Heating pipes of this type are employed e.g. in greenhouses for cultivating plants. Generally known for this purpose are heating pipes having a substantially circular cross-section, with the diameter of such heating pipes being tuned to the required heating area. A drawback of such a heating pipe is its relatively large water content, resulting in a slow reaction of the system when heat is required or, on the other hand, no heat is required any more. The first case occurs e.g. at sunset, so that the temperature in a greenhouse may decrease quite rapidly. Such a temperature decrease can be detected quickly by means of a thermostat, which subsequently switches on the heating system. However, before all heating pipes, which may have a total length of a few hundred meters, have been brought at the desired temperature, too much time may have been lost for optimal growth conditions. Moreover, the switching-on of the heating boiler, after a prolonged period of standstill and the subsequent immediate load to full capacity, may result in condensation in the boiler and hence in an accelerated wear due to corrosion. It has been tried to remove this drawback by means of mixing valves, which prevent the boiler temperature from dropping excessively too quickly. However, this results in increased cost and increased slowness of the system. When the heating is turned off by the thermostat, the relatively large water content has the drawback that a substantial amount of heat is still present which, in fact, is emitted for no purpose, which is highly unattractive from a viewpoint of saving cost and energy.

In order to reduce the water content of the heating pipes, cross-sections deviating from a circular or regularly polygonal shape have already been proposed, such as a triangular shape as known from FR-A-2445213, Fig. 3. Although a reduction of the water content can thus be realized, while maintaining the desired size of the heating area, these solutions have not been found optimal either, because these entailed again adverse effects of their own. When deviating from a circular cross-section, the flow pattern in the heating pipe is adversely affected. On the one hand, there may be an enlarged resistance, which indeed also results from the smaller water content, so that the water has to be circulated at higher speed in order to be capable of supplying and emitting the same quantity of heat ; on the other hand there are dead corners in the cross-sectional profile, i.e. areas wherein no or practically no flow takes place. In the latter areas, sediment will collect which, from a viewpoint of corrosion, often has highly aggressive properties and thus may lead to premature wear and leakage. Besides in designing the heating pipe, it should be taken into account that it mostly has a second function, i.e. as a guiding and carrying rail for a transport system in the greenhouse. A triangular heating pipe for instance can be deemed to be considerably less suitable for that purpose than a circular one.

A heating pipe suited as a guiding and carrying rail for a transport system could be seen as known from Figs. 3-5 of US-A-1874009. However, the water content of said pipe is relatively large compared with the heating area. Accordingly, said pipe is an intermediate product to be provided with heat radiating plates or fins as shown in Figs. 6-9 of US-A-1874009. A finned heating pipe can't be used as guiding and carrying rail and is, in general, unsuited for greenhouse applications.

It is an object of the present invention to provide a heating pipe for emitting heat supplied by means of a fluid passed theretrough, which combines a relatively small water content with a relatively large heating area, and which has no dead areas wherein sediment can collect and can be used as a guiding and carrying rail without any problem.

This is achieved according to the present invention with a pipe which is characterized in that, as viewed in cross-section, it has a wall which defines at least two contiguous regions, distinct as regards their form, a first region having a large length relative to its width and longitudinally adjoining a second region having a width, i.e. the largest dimension thereof perpendicular to the longitudinal direction of the first region, larger than the width of the first region, so that the transition between the first and the second regions is stepped while the ratio between the cross-sectional area and the length of the boundary thereof formed by the wall, is smaller for the first region than for the second region. These features allow to realize a cross-sectional profile for the heating pipe which has a relatively large circumference, and hence heating area relative to its cross-sectional area due to the provision of the first area, which in general can also be defined as a hollow fin or rib. The second region adjoining the first, true, is integral with the first but can be designed largely independently of the first region, so that the second region may have a cross-sectional area to provide for flow properties as favourable as possible and without dead zones wherein sediment can collect. The relatively large heating area relative to the sectional area available for fluid flow has the advantage that the heating system can react relatively quickly in on/off situations, while, moreover, a minimal amount of water need be heated, so that when the system is turned off, only a minimal amount of heat is used ineffectively.

The heating pipe should generally be installed with the second region underneath the first, so that particles settling in the first region fall towards the second region, where sediment is prevented from collecting and accumulating due to the flow conditions prevailing therein. With such an arrangement of the heating pipe, the first region will extend more or less vertically upwards and thus be suitable for use as a guiding and carrying rail. It will be clear that the first region can have a form which is suitable therefor without further ado. A further, additional advantage of the relatively small water content of the heating pipe according to the present invention is that the weight of the total heating pipe network becomes appreciably lower, which has constructional advantages.

The second region may have various forms. In accordance with a further embodiment of the present invention, however, the second region has a substantially circular cross-section. Such a design of the second region has the further, additional advantage that the connecting pipe between the heating pipe and the distribution pipes, which, as it is, has a smaller diameter than the known heating pipes of circular cross-section, may be an extension of the second region, so that no special provisions are required for the transition between the heating pipe and the inlet or outlet pipe.

With a view to combining a water content as small as possible with a heating area as large as possible, according to a still further embodiment of the present invention, the heating pipe is characterized by a substantially keyhole-shaped cross-section, while in view of the above discussion in connection with the arrangement of the heating pipe, the pipe will in actual practice be inverted-keyhole-shaped in cross-section.

The manufacture of such a heating pipe can be effected in any desired, known manner, e.g. by extrusion, welding, deformation and the like. In the event that a deformation method is selected, the starting point may be a pipe of circular cross-section on which the hollow fin or rib is rolled by deformation. In that case, it is preferred that, as viewed in cross-section, the longitudinal walls of the first region converge from the second region and that, as viewed in cross-section, the wall near the transition between the first and the second regions has a radius convex towards the inside, which is advantageous from the viewpoint of flow engineering as well.

Due to the design of the first region as a hollow fin or rib, and the arrangement of the heating pipe with that hollow fin or rib in substantially vertically upward direction, not only is a favourable discharge of sediment effected but likewise an advantageous venting possibility is obtained. In fact any air present in the heating medium will rise and collect at the top of the hollow fin or rib, which effect will be reinforced by the low flow velocity of the heating medium near the top end of the hollow fin or rib. In connection with the above, according to a further preferred embodiment of the present invention, local provisions have been made at the end of the first area remote from the second area for installing venting means.

Some embodiments of the heating pipe according to the present invention will now be described, by way of example, with reference to the accompanying drawings, in which :

Fig. 1 shows a first cross-sectional profile of a heating pipe according to the present invention ; and

Figs. 2-6 show a number of other possible cross-sectional profiles.

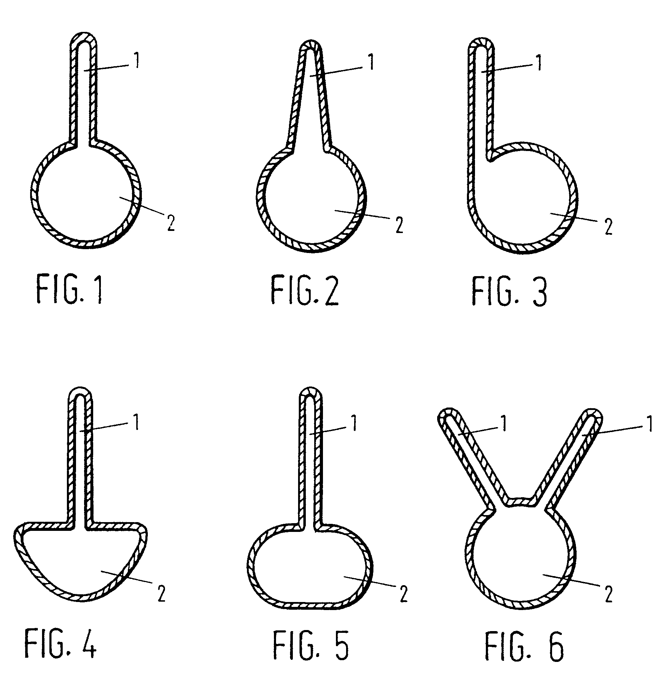

Fig. 1 is a cross-sectional view of a heating pipe consisting of two distinct, contiguous wall regions ; a first region 1 in the form of a hollow fin or rib and a second region 2 having a substantially circular cross-section. The heating pipe is shown in the position in which it is preferably arranged in practice, i.e. with the first region 1 extending vertically upwards from the second region 2. When a heat-emitting fluid is conducted through said heating pipe, the main stream will pass through the circular, second region 2. In view of the shape of this region, this means minimal flow resistances and no dead corners in that part of the pipe. In the first region 1 the flow rate will be lower, viz. increasingly lower as viewed from the second region 2, but as is known from heating engineering, also the rather narrow first region 1 will be fed with hot medium, with the heat being transmitted quickly and effectively to the surrounding space to be heated, as a result of the fin or rib form. Due to the design and the arrangement of the heating pipe, sediment can nowhere collect and accumulate in the heating pipe, for such collections and accumulations can only occur in areas of low or no flow velocity. An area of this kind is present in the heating pipe shown in Fig. 1, but is located in the top end of the first region 1. Sediment cannot collect there but will fall into the first region 1 at the maximum flow velocity. The high position of the region with low or no flow velocity has the additional advantage of offering ideal conditions for collecting and discharging air from the heating medium. To that effect venting means can be provided in a simple manner near the top end of the first region 1.

For the purpose of realizing a simple connection of the heating pipe to an inlet or outlet tube, it is preferred to render the diameter of the second region 2 equal to that of the inlet or outlet tube, while the first region 1 is suitably closed at its end.

Furthermore, the top end of the first region 1 can be used as a guiding and carrying rail for a transport means without more ado. If desired, the top end of the first portion, to that effect, may have any desired configuration deviating from the round shape shown in the figure.

Figs. 2-6 show further possible forms of the heating pipe.

The cross-sectional profile of the heating pipe shown in Fig. 2 deviates from that shown in Fig. 1 by the configuration of the walls of the first portion converging from the second portion. A similar configuration can be realized in a comparatively simple manner by deformation of a circular pipe having a circumference equal to that of the heating pipe shown in Fig. 2.

In the heating pipe shown in Fig. 3, the first portion links up tangentially, instead of radially, with the second portion. In this embodiment, it could be considered to use the top of the second portion as a guiding and carrying rail for a transport means.

In the heating pipe shown in Fig. 4, the second portion has a substantially C-shaped cross-section, while that of Fig. 5 has an elliptical cross-section.

Fig. 6, finally, shows two first portions 1 mutually enclosing an angle and linking up substantially radially with the second portion. This embodiment, true, has a larger water content than the above discussed embodiments, but also a substantially larger heating area.

It has been mentioned that the heating pipe can be made by deformation of a pipe having a circular cross-section. Naturally, a different cross-section may form the starting point, while other manufacturing methods, such as extrusion or welding, may be employed.

## Claims

1. A heating pipe for emitting heat supplied by means of a fluid passed therethrough and having in cross-section a wall deviating from a circular or regularly polygonal shape, characterized in that the pipe, as viewed in cross-section, has a wall defining at least two contiguous regions (1, 2) distinct as regards their form, a first region (1) having a large length relative to its width and linking up in longitudinal direction with a second region (2) having a width, i.e. the largest dimension thereof perpendicular to the longitudinal direction of the first region (1), larger than the width of the first region (1) so that the transition between the first and the second regions is stepped, the ratio between the cross-sectional area and the length of the boundary thereof formed by the wall, being smaller for the first region (1) than for the second region (2).

2. A heating pipe as claimed in claim 1, characterized in that the second region (2) has a substantially circular cross-section.

3. A heating pipe as claimed in claim 1 or 2, characterized by a substantially keyhole-shaped cross-section.

4. A heating pipe as claimed in any of the preceding claims, characterized in that, as viewed in cross-section, the longitudinal walls of the first region (1) converge from the second region (2).

5. A heating pipe as claimed in any of the preceding claims, characterized in that, as viewed in cross-section, the wall near the transition between the first and the second region (1, 2), has a radius convex towards the inside.

6. A heating pipe as claimed in any of the preceding claims, characterized in that local provisions have been made at the end of the first region (1) remote from the second region (2) for installing venting means.

## Patentansprüche

1. Heizungsrohr zur Abgabe von Wärme, die mittels einer durch dieses Rohr hindurchgeleiteten Flüssigkeit zugeführt ist, welches Rohr im Querschnitt eine von der Form eines Kreises oder eines regelmäßigen Vielecks abweichende Wand aufweist, dadurch gekennzeichnet, daß das Rohr im Querschnitt gesehen eine Wand aufweist, die mindestens zwei aneinandergrenzende, in ihrer Form unterschiedliche Bereiche (1, 2) begrenzt, wobei ein erster Bereich (1) eine in bezug auf seine Breite große Länge aufweist und sich in Längsrichtung einem zweiten Bereich (2) anschließt, dessen Breite, d.h. dessen größte Abmessung lotrecht zur Längsrichtung des ersten Bereiches (1), größer als die Breite des ersten Bereiches (1) ist, so daß der Übergang zwischen dem ersten und dem zweiten Bereich gestuft ist, wobei das Verhältnis zwischen dem Querschnittsgebiet und der Länge seiner durch die Wand gebildeten Begrenzung kleiner für den ersten Bereich (1) als für den zweiten Bereich (2) ist.

2. Heizungsrohr nach Anspruch 1, dadurch gekennzeichnet, daß der zweite Bereich (2) einen im wesentlichen kreisförmigen Querschnitt aufweist.

3. Heizungsrohr nach Anspruch 1 oder 2, gekennzeichnet durch einen im wesentlichen schlüssellochförmigen Querschnitt.

4. Heizungsrohr nach einem der vorhergehenden Ansprüche, dadurch gekennzeichnet, daß im Querschnitt gesehen die Längswände des ersten Bereiches (1) vom zweiten Bereich (2) konvergiert.

5. Heizungsrohr nach einem der vorhergehenden Ansprüche, dadurch gekennzeichnet, daß im Querschnitt gesehen die Wand nahe dem Übergang zwischen dem ersten und dem zweiten Bereich (1, 2) einen nach innen konvexen Radius aufweist.

6. Heizungsrohr nach einem der vorhergehenden Ansprüche, dadurch gekennzeichnet, daß an dem Ende des ersten Bereiches (1), das vom zweiten Bereich (2) entfernt ist, Einrichtungen zur Anordnung von Lüftungsmitteln vorgesehen sind.

## Revendications

1. Tuyau de chauffage pour l'émission de chaleur fournie au moyen d'un fluide le traversant et possédant en section transversale une paroi s'écartant d'une forme circulaire ou régulièrement polygonale, caractérisé en ce que le tuyau, vu en section transversale, possède une paroi définissant au moins deux régions (1, 2) contiguës, distinctes en ce qui concerne leur forme, une première région (1) ayant une longueur importante par rapport à sa largeur et se rattachant, dans le sens longitudinal, à une seconde région (2) ayant une largeur, c'est-à-dire sa plus grande dimension perpendiculaire au sens longitudinal de la première région (1), dépassant la largeur de la première région (1), de manière telle que la transition entre la première et la seconde régions soit variable, le rapport entre l'aire de la section transversale et la longueur de la limite de celle-ci formée par la paroi étant moindre, pour la première région (1), que pour la seconde région (2).

2. Tuyau de chauffage, selon la revendication 1, caractérisé en ce que la seconde région (2) possède une section transversale essentiellement circulaire.

3. Tuyau de chauffage selon la revendication 1 ou 2, caractérisé par une section transversale essentiellement en forme de trou de serrure.

4. Tuyau de chauffage selon l'une quelconque des revendications qui précèdent, caractérisé en ce que, vues en section transversale, les parois longitudinales de la première région (1) convergent à partir de la seconde région (2).

5. Tuyau de chauffage selon l'une quelconque des revendications qui précèdent, caractérisé en ce que, vue en section transversale, la paroi proche de la transition entre la première et la seconde région (1, 2) possède un rayon convexe dirigé vers l'intérieur.

6. Tuyau de chauffage selon l'une quelconque des revendications qui précèdent, caractérisé en ce que des dispositions locales ont été prises à l'extrémité de la première région (1), éloignée de la seconde région (2), pour installer des moyens de ventilation.

FIG. 1

FIG. 2

FIG. 3

FIG. 4

FIG. 5

FIG. 6